# EUROPÄISCHE PATENTANMELDUNG

(11) **EP 3 804 939 A1**
(43) Veröffentlichungstag der Anmeldung: **14.04.2021**
(21) Anmeldenummer: 19202869.4
(22) Anmeldetag: 11.10.2019
(51) Int. Cl.: B29C 44/46

(54) **VERFAHREN UND VORRICHTUNG ZUR HERSTELLUNG VON SCHAUM-VERBUNDELEMENTEN**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Die Anmeldung betrifft eine Gießharke (500, 510, 520) zur Auftragung eines flüssigen Reaktionsgemisches auf eine Deckschicht (10), umfassend einen Verteilerkanal (250) und mehrere Austrittsöffnungen (550, 560), wobei die Geometrie der Austrittsöffnungen in der Gießharke so gestaltet ist, dass die Austragsmenge an mindestens einem Ende des Gießrohrs größer ist als in der Mitte der Gießharke, eine Auftragsvorrichtung (20) enthaltend dieselbe und ein Verfahren zur Herstellung von Schaum-Verbundelementen unter Verwendung dieser Gießharke.

## Beschreibung

Die vorliegende Erfindung betrifft eine Gießharke zur Auftragung eines flüssigen Reaktionsgemisches auf eine Deckschicht, umfassend einen Verteilerkanal und mehrere Austrittsöffnungen, wobei die Geometrie der Austrittsöffnungen in der Gießharke so gestaltet ist, dass die Austragsmenge an mindestens einem Ende der Gießharke größer ist als in der Mitte der Gießharke.

Die Erfindung betrifft ebenfalls ein Verfahren und eine Vorrichtung zum Auftragen einer schäumbaren Reaktionsmischung auf eine sich bewegende Deckschicht, wobei die Reaktionsmischung aus einer Auftragsvorrichtung umfassend mindestens eine erfindungsgemäße Gießharke ausgetragen wird.

Verbundelemente aus mindestens einer Deckschicht und einem Isolierkern werden heutzutage in vielen Industriebereichen eingesetzt. Der grundlegende Aufbau solcher Verbundelemente besteht dabei aus mindestens einer Deckschicht, auf welche ein isolierend wirkender Werkstoff aufgebracht wird. Als Deckschichten können dabei beispielsweise Bleche aus beschichtetem Stahl, Edelstahl, Aluminium, Kupfer oder Legierungen der beiden letztgenannten eingesetzt werden. Darüber hinaus können auch Dämmplatten aus einer Kombination aus Deckschichten und Isolierkern hergestellt werden. Es können Kunststofffolien, Aluminiumfolien, Holz, Bitumen, Glasfaser- oder Mineralfaservliese sowie cellulosehaltige Materialien wie Papier, Pappe oder Pappmaché als Deckschichtmaterialien eingesetzt werden. Oft werden mehrlagige Deckschichten aus z.B. Aluminium und Papier verwendet. Die Wahl des geeigneten Deckschichtmaterials und der einzelnen Schichten (untere Deckschicht, Isolierkern, obere Deckschicht, gegebenenfalls weitere Zwischenschichten) hängt dabei von dem beabsichtigten Einsatzgebiet der Verbundelemente oder Dämmplatten und den sich daraus ergebenden Materialanforderungen ab. Als Isolierkern können insbesondere Schaumstoffe auf Basis von Polyurethan (PUR) und/oder Polyisocyanurat (PIR) eingesetzt werden.

Dämmplatten werden häufig im Haus- oder Wohnungsbau eingesetzt. Neben der Verwendung von Verbundelementen zur Isolierung von beispielsweise Kühlhäusern ist die Anwendung als Fassadenelemente an Gebäuden oder als Elemente von Industrietüren wie beispielsweise Sektionaltoren bedeutsam. Entsprechende Verbundelemente, im Folgenden auch als Sandwich-Verbundelemente bezeichnet, zeigen durch ihre Deckschicht eine dem verwendeten Material entsprechende Stabilität und Oberflächengestaltung, während der aufgebrachte Schaumstoff entsprechende wärmeisolierende Eigenschaften verleiht.

Zur Herstellung entsprechender Dämmplatten oder Verbundelemente wird auf eine bereitgestellte Deckschicht ein schäumendes Reaktionsgemisch mittels einer Auftragsvorrichtung aufgebracht.

Hierzu werden zum Beispiel bei der Verwendung von Schaumstoffen auf Basis von Polyurethan (PUR) und/oder Polyisocyanurat (PIR) die entsprechenden Polyol-Komponenten und IsocyanatKomponenten miteinander gemischt und auf die Deckschicht aufgetragen, auf welcher sie aufschäumen und aushärten.

Als Auftragsvorrichtung zur Aufbringung des schäumenden Reaktionsgemisches auf die Deckschicht kommen häufig ein oder mehrere Rohre zum Einsatz, welche entlang ihrer Längserstreckung mit einer Mehrzahl von Austrittsöffnungen, beispielsweise Bohrungen, versehen sind, aus welchen das in das Rohr eingebrachte Reaktionsgemisch austreten kann. Solche Rohre werden üblicherweise als Gießharken bezeichnet.

Im Folgenden werden die Bezeichnungen "Gießrohr" und "Gießharke" synonym verwendet. Mit "Ende der Gießharke" ist im Sinne dieser Anmeldung jeweils einer der beiden äußeren Abschnitte des Rohrs gemeint, welcher einer Strecke von maximal einem Viertel der Gesamtlänge der Gießharke in ihrer Längsausdehnung entspricht. Das Innenrohr der Gießharke, welches das Reaktionsgemisch den Austrittsöffnungen zuführt, wird auch als Verteilerkanal bezeichnet.

EP 2 125 323 A offenbart ein Verfahren bzw. eine Auftragsvorrichtung, wobei der Auftrag mittels eines feststehenden, parallel zur Deckschichtebene und rechtwinklig zur Bewegungsrichtung der Deckschicht angebrachten, mit Öffnungen versehenen Rohres erfolgt. Das flüssige Ausgangsmaterial für den Hartschaumstoff auf Isocyanatbasis wird in der Mitte des mit Bohrungen versehenen Rohres zugeführt. In einer besonderen Ausführungsform der Erfindung nimmt der Durchmesser des Rohres von der Mitte zu den Enden des Rohres hin ab. Weiterhin kann von der Mitte zu den Enden der Harke auch der Durchmesser der Austrittslöcher und/oder der Abstand der Löcher verringert werden. Durch diese Maßnahmen, die allein oder in Kombination miteinander durchgeführt werden, soll die Geschwindigkeit des Reaktionsgemisches im Rohr beziehungsweise bei Austritt durch die Löcher konstant gehalten werden mit dem Ziel, eine gute Oberflächenstruktur (Minimierung von Lunkerbildung) zu erhalten. Allerdings führt die Verringerung der Lochabstände zu einem geringeren Abstand der auf die Deckschicht aufgetragenen Schaumstränge, was zu einem früheren Zusammenfließen der Stränge und als Folge davon zu einem gegenüber den anderen Bereichen schnelleren Anstieg der Schaumfront führt. Bei weiterer Verringerung der Lochabstände steigt die Anzahl der Löcher zum Ende der Gießharke hin an, was diesen Effekt noch verstärkt. Die ungleichmäßige Schaumfront führt beim Kontakt mit der oberen Deckschicht zu Querströmungen, was eine inhomogene Zellausbildung, eine geringere Druckfestigkeit insbesondere senkrecht zur Deckschicht und eine schlechtere Oberflächenqualität bewirkt.

In EP 2 234 732 A wird ein Auftrag mittels mindestens eines feststehenden, parallel zur Deckschichtebene und rechtwinklig zur Bewegungsrichtung der Deckschicht angebrachten, mit Öffnungen versehenen Rohres beschrieben, wobei die Öffnungen einen Durchmesser und eine Länge aufweisen, dadurch gekennzeichnet, dass die Zuführung des Gemisches in der Mitte des Rohres erfolgt und die Länge der Öffnungen von der Mitte des Rohres zu dessen Enden hin abnimmt. Die Länge der Öffnungen soll vorzugsweise durch ein an der Öffnung auf der Unterseite des Rohres angebrachtes Metallteil bestimmt werden. Auch diese Maßnahme hat das Ziel, die Oberflächenstruktur des Schaums zu verbessern, außerdem soll die Haftung zwischen Deckschicht und Hartschaum verbessert werden.

Um möglichst viele der den Auftrag beeinflussenden Parameter einbeziehen zu können, wird in WO 2016/37842 schließlich ein Verfahren zum Design von Gießharken vorgeschlagen, deren Geometrie mit Hilfe einer 3D-Strömungssimulation (Computational Fluid Dynamics - CFD) ausgelegt wird. In die Berechnung gehen unterschiedliche Prozessparameter wie z.B. Paneelbreite, Durchflussmenge, Geschwindigkeit des Produktionsbandes und eine von der Schergeschwindigkeit abhängige Viskosität der Reaktionsmischung ein.

Diesen bekannten Gießharken bzw. Auftragsvorrichtungen gemeinsam ist es, dass sie mit dem Ziel entwickelt wurden, einen möglichst gleichmäßigen Auftrag der Reaktionsmischung über die Breite der Gießharke zu gewährleisten. Insbesondere soll das aufschäumende Gemisch mit gleicher Austrittsgeschwindigkeit und -menge aus den Öffnungen des Rohres/der Gießharke treten, unabhängig davon, ob sich diese Öffnungen in der Mitte des Rohres, also nah an der Zuführung, oder an den Enden des Rohres, also weiter entfernt von der Zuführung befinden.

Für die Qualität von Dämmplatten ist insbesondere die vollständige Ausformung der Plattenränder wichtig. Aus Produktionsgründen kann die Reaktionsmischung aber nicht bis ganz an den Rand der Deckschicht aufgetragen werden, insbesondere, wenn kein Seitenpapier verwendet wird. Um sicherzustellen, dass die Reaktionsmischung nicht teilweise neben die Deckschicht aufgetragen wird, ist ein ausreichender Mindestabstand der Auftragsvorrichtung vom Rand nötig. Wenn die Auftragsvorrichtung zu dicht über den Rändern der Deckschicht endet, kann die Reaktionsmischung neben der Deckschicht aufkommen, was zu Produktverlusten und zu einer Verschmutzung der Anlage führen kann. Insbesondere bei hohen Produktionsgeschwindigkeiten mit schnell reagierenden Systemen (allgemein als "Schnellläufer-Verfahren" bezeichnet) führt dies jedoch dazu, dass die Plattenränder häufig nicht komplett von der aufschäumenden Reaktionsmischung ausgeformt werden. Will man mit den bisher bekannten Auftragsvorrichtungen dieses Problem adressieren, kann dies nur über eine Erhöhung der gesamten Austragsmenge erreicht werden. Dies führt jedoch zu höheren Materialkosten, höherem Gewicht der Dämmplatten und schlechteren Wärmeisolationseigenschaften, und ist daher keine brauchbare Lösung für dieses Problem.

In DE 20 2011 001 109 U1 wird zur Lösung dieses Problems die Verwendung einer Gießharke vorgeschlagen, bei der die Öffnungen, die sich über dem Rand der Deckschicht befinden, in einem Winkel von 1 bis 50° in Richtung des Randes der Deckschicht angebracht sind. Der schräge Austragswinkel beim Auftreffen des Gemisches auf die Deckschicht führt allerdings teilweise zu Spritzern oder auch zu Lufteinschlüssen mit der Folge von Störungen an der Schaumunterseite. Mit zunehmendem Schrägungswinkel des Auftrags auf die Deckschicht und mit steigender Austragsmenge nimmt die Austragsgeschwindigkeit quer zur Transportrichtung der Deckschicht zu, womit die Gefahr steigt, dass das Gemisch, wenn kein Seitenpapier verwendet wird, doch die Deckschicht seitlich verlässt oder an der seitlichen Begrenzung der Deckschicht hochschwappt. Beide Effekte, der schräge Auftreffwinkel und die unruhige Strömung an der Seite, führen zu einer sehr inhomogenen Zellausbildung und zu einer ungleichmäßigen Schaumoberfläche. Insbesondere bei flexiblen Deckschichten (Papier, Metallfolien, ...), die üblicherweise bei der Herstellung von Dämmplatten verwendet werden, sind die Plattenkanten dann häufig nicht mehr scharfkantig ausgebildet, sondern weisen unerwünschte Rundungen auf. Ein wichtiges Qualitätskriterium ist bei Dämmplatten aber gerade die vollständige rechteckige Kantenausprägung. Hinzu kommt, dass die Schaumoberfläche in einem gewissen Abstand zum Rand hin oft ein Tal aufweist. Die Einschnürung sieht man bei flexiblen Deckschichten als großflächige Einfallstelle an den Oberseiten. Die ungleichmäßige Zellstruktur führt häufig auch zu Riefen und Lunkern in der Oberfläche. Die inhomogene Zellausrichtung an der Seite führt auch noch zu schlechteren Wärmeisolationseigenschaften sowie zu einer niedrigen Druckfestigkeit. Die Druckfestigkeit ist deutlich höher, wenn die Zellen senkrecht zur Deckschicht orientiert sind. Das wird insbesondere dadurch begünstigt, wenn der Schaum nur in Dickenrichtung aufschäumt und möglichst keine Querströmung auftritt.

Ausgehend von den Defiziten der Gießharken des Stands der Technik stellt sich somit die Aufgabe, eine Vorrichtung und ein Verfahren zur Verfügung zu stellen, mit der die Qualität von Dämmplatten insbesondere bezüglich einer vollständigen Ausformung der Plattenränder weiter verbessert werden kann.

Erfindungsgemäß gelöst wird die Aufgabe durch eine Gießharke gemäß Anspruch 1, durch eine Auftragsvorrichtung gemäß Anspruch 7 und ein Verfahren gemäß Anspruch 12. Vorteilhafte Ausführungsformen sind in den Unteransprüchen angegeben.

Die hier vorliegende Erfindung betrifft in einem ersten Aspekt eine Gießharke zur Auftragung eines flüssigen Reaktionsgemisches auf eine Deckschicht, umfassend einen Verteilerkanal und mehrere Austrittsöffnungen, wobei die Geometrie der Austrittsöffnungen in der Gießharke so gestaltet ist, dass die Austragsmenge an mindestens einem Ende des Gießrohrs größer ist als in der Mitte der Gießharke.

In dieser Anmeldung wird mit "Austragsmenge" diejenige Menge an flüssigem Reaktionsgemisch bezeichnet, die bei stationärer Fahrweise mit mindestens der strömungstechnisch vorgegebenen Durchflussmenge durch die Austragsöffnungen der Gießharke ausgetragen wird.

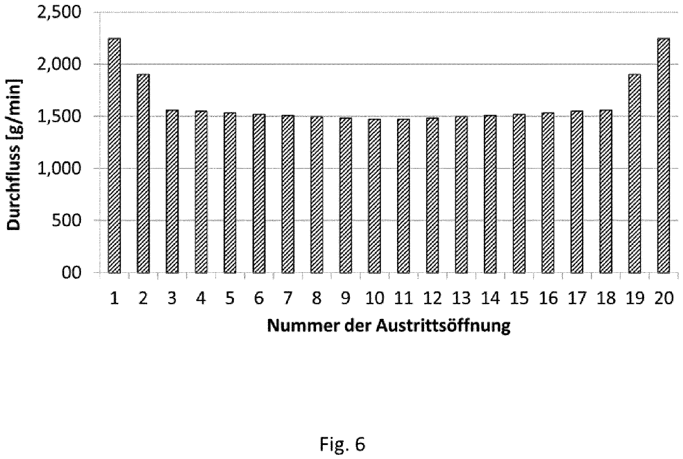

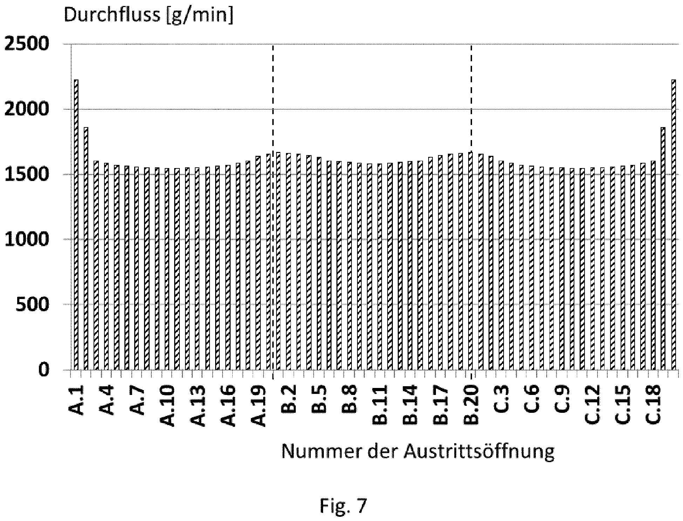

Die Geometrie der Austrittsöffnungen wird bestimmt durch das gewünschte Austragsprofil, welches mittels graphischer Auftragung des Durchflusses (Austragsmenge/Zeiteinheit) gegen die Position der Austragsöffnung in der Gießharke erhalten wird. In Ausführungsformen mit einer erhöhten Austragsmenge an nur einem Ende der Gießharke ergibt sich somit ein nicht symmetrisches Austragsprofil mit einseitig erhöhten Durchflusswerten (siehe auch Figur 7, linkes bzw. rechtes Drittel). In Ausführungsformen mit einer erhöhten Austragsmenge an beiden Enden der Gießharke ergibt sich ein Austragsprofil mit beidseitig erhöhten Durchflusswerten (siehe Figur 6), in einem bevorzugten Fall handelt es sich um ein symmetrisches Austragsprofil, welches sich bei einer spiegelsymmetrischen Anordnung der Austrittsöffnungen und mittiger Zuführung ergibt.

Das mit den Austrittsöffnungen versehene Rohr der Gießharke kann einen im Wesentlichen konstanten Querschnitt aufweisen. Aus Fertigungsgründen und für optimale Strömungsverhältnisse ist ein kreisförmiger Querschnitt bevorzugt. Zur Reduzierung der Verweilzeit kann aber auch ein Rohr mit abnehmendem Querschnitt vom Zulauf des Reaktionsgemisches bis zur äußeren Austrittsöffnung am Rohrende eingesetzt werden. Unter Verweilzeit wird die Zeit verstanden, die die Reaktionsmischung für die Strömung vom Eintritt in die Gießharke bis zum Austritt aus der jeweiligen Austragsöffnung benötigt.

Die Zuführung des flüssigen Reaktionsgemisches in den Verteilerkanal kann sowohl mittig als auch an einem Ende erfolgen. Bevorzugt erfolgt die Zuführung mittig.

Die Geometrie der Austrittsöffnungen (im Weiteren auch mit "Loch" bzw. "Löcher" bezeichnet) wird dabei bestimmt durch die jeweilige Querschnittsfläche der Öffnung **FA** und die Länge der Öffnung **LA.**

Bevorzugt wird die Erhöhung der auszutragenden Menge durch eine Vergrößerung der durchschnittlichen Querschnittsflächen FA an mindestens einem Ende der Gießharke erzielt. Besonders bevorzugt ist die Querschnittsfläche kreisförmig, in diesem Fall lässt sich die Fläche mittels ihres Durchmessers **DA** beschreiben.

Eine Erhöhung der auszutragenden Menge kann auch erreicht werden durch eine Verringerung der Lochlänge LA. Im Stand der Technik ist eine Verringerung der Lochlänge als Mittel beschrieben, um eine über die Breite möglichst konstante Auftragsmenge und -geschwindigkeit einzustellen. Überraschend wurde nun aber gefunden, dass eine über die im Stand der Technik beschriebene hinausgehende Verringerung der Länge LA günstig ist.

In einer besonders bevorzugten Ausführungsform wird die Geometrie der äußeren Austrittsöffnungen an mindestens einem Ende der Gießharke so verändert, dass im Vergleich zu den inneren Austrittsöffnungen sowohl die durchschnittliche Querschnittsfläche FA vergrößert ist als auch ihre durchschnittliche Länge LA verringert ist.

Mit "Ende der Gießharke" ist im Sinne dieser Anmeldung das äußere Viertel oder weniger des Rohrs der Gießharke in seiner Längsausdehnung gemeint. An diesem Rohrende befinden sich bevorzugt 1 bis 6 Austrittsöffnungen (weiterhin genannt "äußere Austrittsöffnungen"), insbesondere 1 bis 4 Öffnungen und ganz besonders 1 bis 2 Öffnungen, deren Geometrie wie oben beschrieben verändert wurde. Bevorzugt betragen die Austragsmengen für die äußeren Austrittsöffnungen das > 1,1 - ≤ 3 fache, besonders bevorzugt das 1,2 - 2 fache der übrigen Austrittsöffnungen.

Die Abstimmung der Größenverhältnisse und Geometrien der an der Führung des Reaktionsgemisches beteiligten Komponenten der Gießvorrichtung erfolgt beispielsweise computergestützt, vorzugsweise mit einer CFD-Berechnung.

In einer ersten Ausführungsform befinden sich an beiden Rohrenden Austrittsöffnungen, deren Geometrie so gestaltet ist, dass die Menge an flüssigem Reaktionsgemisch, welche durch die Austrittsöffnungen ausgetragen werden kann (Austragsmenge), größer ist als die Menge, welche durch die weiter innenliegenden bzw. mittigen Austrittsöffnungen ausgetragen werden kann (im Folgenden auch als "Gießharke Typ A" bezeichnet). Die Änderung der Geometrie der Austrittsöffnungen ist von der Mitte zu den beiden äußeren Enden hin identisch, kann aber unterschiedlich sein. Diese Gießharke wird in der Auftragsvorrichtung zur Herstellung eines Verbundelementes aus mindestens einer Deckschicht und einer Kernschicht so angeordnet, dass aus den vergrößerten Austrittsöffnungen an den beiden Enden des Gießrohres die Reaktionsmischung möglichst nah an beiden Rändern der Deckschicht aufgetragen wird, also im Wesentlichen quer zur Bewegungsrichtung der Deckschicht (d.h. Bewegungsrichtung der Deckschicht und Längsachse der Gießharke bilden einen Winkel von > 60 °, bevorzugt > 80 ° und besonders bevorzugt einen Winkel > 85 °). Diese erfindungsgemäße erste Ausführungsform der Gießharke kommt vor allem dann in einer Auftragsvorrichtung zum Einsatz, wenn die Breite der zu bedeckenden Deckschicht gleich oder nur wenig breiter (bevorzugt weniger als 20 % breiter) als die Länge des Rohres der Gießharke ist. Die Auftragsvorrichtung umfasst dann genau eine Gießharke.

In einer zweiten Ausführungsform weist die Gießharke ein Gießrohr mit mehreren Austrittsöffnungen auf, wobei die Geometrie der Austrittsöffnungen so gestaltet ist, dass die Austragsmenge an den Austrittsöffnungen an genau einem Ende der Gießharke größer ist als an den übrigen Austrittsöffnungen (im Folgenden auch als "Gießharke Typ B" bezeichnet). Die Geometrie der Austrittsöffnungen ist also an den beiden Enden des Gießrohrs unterschiedlich, von der Mitte des Gießrohres aus gesehen also in jedem Fall asymmetrisch. Der Einlauf des Reaktionsgemisches kann in diesem Fall in der Mitte des Gießrohrs erfolgen oder an einem Ende des Gießrohres, beispielsweise an dem mit den nicht vergrößerten Austrittsmengen. Bevorzugt erfolgt der Einlauf in der Mitte des Gießrohrs.

Diese zweite Ausführungsform der Gießharke wird in der Auftragsvorrichtung zur Herstellung eines Verbundelementes aus mindestens einer Deckschicht und einer Kernschicht bevorzugt so positioniert, dass aus den Austrittsöffnungen mit den vergrößerten Lochdurchmessern die Reaktionsmischung zum Rand der Deckschicht hin aufgetragen wird. Bevorzugt wird diese Gießharke in der Auftragsvorrichtung mit weiteren Gießharken kombiniert, um die gesamte Deckschichtbreite abzudecken.

In einer besonders bevorzugten Ausführungsform umfasst die Auftragsvorrichtung zwei dieser Gießharken der zweiten Ausführungsform, wobei diese so angeordnet sind, dass jeweils aus den Enden mit den vergrößerten Austragsmengen zu jeweils einem Rand der Deckschicht hin aufgetragen wird.

Zwischen diesen beiden Gießharken können weitere konventionelle, symmetrische Gießharken angeordnet sein, wobei diese bevorzugt Austrittsöffnungen mit im Wesentlichen gleichen Austragsmengenverteilungen (d.h., mit weniger als +/- 10 % Abweichung von ihrem Mittelwert) aufweisen. Hierfür können beispielsweise die bekannten konventionellen symmetrischen Gießharken mit konstanten Durchmessern aus dem Stand der Technik verwendet werden. Die Gießharken können beispielsweise als Einzelgießharke oder Gießharkenpaare, wie in EP 1 857 248 A2, EP 2 614 944 A1 oder EP 2 804 736 A1 beschrieben, ausgeführt sein. Bei der Verwendung von mehreren Gießharken können diese entweder in einer Linie angeordnet sein oder auch in Bewegungsrichtung der Deckschicht gegebenenfalls leicht versetzt hintereinander, so dass die aus den Austragsöffnungen eines Gießrohrs ausgetragene Reaktionsmischung zumindest teilweise die aus den Austragsöffnungen des anderen Gießrohrs ausgetragene Reaktionsmischung kontaktiert. Mögliche Anordnungen von Gießrohren in Auftragsvorrichtungen können so wie in WO 2018/141731, WO 2018/141720 oder WO 2018/141735 beschrieben ausgeführt sein.

Erfindungsgemäß wird in der Auftragsvorrichtung also entweder a) genau eine Gießharke mit Austrittsöffnungen mit vergrößerten Austragsmengen an beiden Enden des Gießrohres (Gießharke Typ A) oder b) mindestens eine, bevorzugt zwei Gießharken mit Austrittsöffnungen mit vergrößerten Austragsmengen an genau einem Ende des Gießrohres (Gießharke Typ B), optional in Kombination mit mindestens einer symmetrischen Gießharke mit im Wesentlichen konstanten Austragsmengen, verwendet. Bevorzugt werden in der Variante b) zwei erfindungsgemäße Gießharken des Typs B mit einer konventionellen Gießharke kombiniert.

Die Anzahl der Austrittsöffnungen ist abhängig von der Breite der Gießharke und wird daher im Folgenden in der Einheit [1/m] angegeben, wobei sich die Länge in Metern auf die Länge des Verteilerkanals bezieht.

Bevorzugt beträgt die Anzahl der Austrittsöffnungen in der erfindungsgemäßen Vorrichtung 12/m bis 125/m, besonders bevorzugt 25/m bis 100/m, und ganz besonders bevorzugt 30/m bis 75/m.

In einer bevorzugten Ausführungsform beträgt die Breite der Gießharke ca. 400mm.

Bei den Austrittsöffnungen handelt es sich im einfachsten Fall um eine Bohrung im Rohr. Die Bohrungen sind bevorzugt senkrecht zur Rohrachse ausgeführt, und die Gießharke bzw. die Gießharken werden bevorzugt so angebracht, dass die flüssige Reaktionsmischung im Wesentlichen senkrecht (d.h. in einem Winkel von 90 ° +/- 10 °, bevorzugt 90 ° +/- 5 °,) auf die Deckschicht aufgetragen wird.

Im Falle von kreisrunden Austrittsöffnungen liegt der Durchmesser DA bevorzugt im Bereich zwischen 1 mm und 8 mm, besonders bevorzugt zwischen 1,2 mm - 6 mm und insbesondere zwischen 1,3 mm - 5 mm.

Es ist auch möglich, die Länge der Austrittsöffnungen zu vergrößern, z.B. durch auf das Gießrohr an den Austrittsöffnungen senkrecht angebrachte Röhrchen. Unter der Länge LA der Austrittsöffnungen wird die Distanz von der Kante der Öffnung an der Innenseite des Verteilerkanals bis zum Punkt, an dem das Reaktionsgemisch aus dem Rohr hinausfließt, verstanden. Eine weitere, weniger bevorzugte Möglichkeit der Verlängerung der Austrittsöffnungen ist in der DE 20 2011 001 109 U1, [0036] beschrieben.

Die Länge der Austrittsöffnungen LA liegt bevorzugt im Bereich zwischen 1 und 100 mm, besonders bevorzugt 1 bis 50 mm und insbesondere 3 bis 35 mm.

Das Innenrohr der Gießharke wird auch als Verteilerkanal bezeichnet, da hierüber die Reaktionsmischung vom Einlauf auf die Austrittsöffnungen verteilt wird. Die Querschnittsfläche des Verteilerkanals kann konstant sein und der Durchmesser, da aus Fertigungsgründen und für optimale Strömungsverhältnisse eine kreisförmige Ausführung bevorzugt wird, beispielsweise 5 - 25 mm, bevorzugt 5 - 15 und insbesondere 6 bis 12 mm betragen. Alternativ kann der Verteilerkanalquerschnitt auch vom Einlauf zum Ende des Gießrohrs hin abnehmen. Der Durchmesser beträgt bei der bevorzugten kreisförmigen Ausführung am Ende des Verteilerkanals beispielsweise 30 - 100 % des Durchmessers am Zulauf, bevorzugt 60 - 100 %.

Bevorzugt ist der Abstand der einzelnen Austrittsöffnungen zueinander konstant und abhängig von der Gesamtlänge der Gießharke und der Anzahl der Austrittsöffnungen. Die Austragsmenge am Ende der Gießharke lässt sich alternativ auch erhöhen, wenn der Abstand der Austrittsöffnungen zum Ende hin kleiner wird. Diese Ausführung führt aber häufig zu den oben genannten Problemen.

Das erfindungsgemäße Verfahren unter Verwendung der erfindungsgemäßen Auftragsvorrichtung ist vorzugsweise ein kontinuierliches Verfahren.

Es eignet sich zur Herstellung von Schaum-Verbundelementen wie Dämmplatten in schnell laufender Produktionsweise. Das Verfahren zur kontinuierlichen Herstellung von Schaum-Verbundelementen umfassend eine Polyurethan (PUR)- oder Polyurethan/Polyisocyanurat (PUR/PIR)-Schaumkernschicht ist an sich z.B. aus dem hierin zitierten Stand der Technik bekannt. Die Deckschichtgeschwindigkeit beträgt dickenabhängig beispielsweise ≥ 10 Meter pro Minute, vorzugsweise ≥ 15 Meter pro Minute, mehr bevorzugt ≥ 30 Meter pro Minute.

Über die Auftragsvorrichtung wird die flüssige Reaktionsmischung auf die sich kontinuierlich bewegende Deckschicht aufgetragen. Der Zulauf zu dem Gießrohr/den Gießrohren kann beispielsweise mittig oder seitlich sein. Die Gießrohre empfangen einen Produktstrom, der in einem oder mehreren Mischköpfen aus einer Polyolkomponente und einer Isocyanatkomponente hergestellt wurde.

Als Deckschicht oder Substrat eignen sich beispielsweise Metall-Folien, insbesondere AluminiumFolien, Bitumen-Folien und Mehrschichtdeckschichten, z. B. aus Aluminium und Papier, und Kunststoff-Folien. Die Breite der Deckschicht ist grundsätzlich nicht beschränkt. Beispielsweise kann die Deckschicht eine Breite zwischen 1000 und 1300 mm aufweisen, aber auch eine Breite von 2400 mm Breite ist möglich.

Als Reaktionsmischung kommt insbesondere eine zu einem Polyurethan- und/oder Polyisocyanuratschaum reagierende Mischung in Frage. In einer Ausführungsform des erfindungsgemäßen Verfahrens umfasst daher die Reaktionsmischung
ein Polyisocyanat B), und
eine isocyanat-reaktive Zusammensetzung A), enthaltend
mindestens ein Polyol A1) und
gegebenfalls weitere isocyanat-reaktive Verbindungen A2), und
gegebenenfalls Additive und Hilfsmittel A3) wie z.B. Stabilisatoren und Flammschutzmittel
optional Katalysatoren D), und
ein (oder mehrere) Treibmittel C).

Vorzugsweise ist das Polyol A) ausgewählt aus der Gruppe der Polyetherpolyole, Polyesterpolyole, Polycarbonatpolyole und/oder Polyetheresterpolyole. Die OH-Zahl des eingesetzten Polyols oder der eingesetzten Polyole kann beispielsweise > 15 mg KOH/g bis < 800 mg KOH/g betragen und die durchschnittliche OH-Funktionalität des eingesetzten Polyols oder der eingesetzten Polyole ist ≥ 1,5. Die OH-Zahl gibt im Falle eines einzelnen zugesetzten Polyols dessen OH-Zahl an. Im Falle von Mischungen wird die mittlere OH-Zahl angegeben. Dieser Wert kann anhand von DIN 53240-2 (1998) bestimmt werden. Die durchschnittliche OH-Funktionalität der Polyole liegt beispielsweise in einem Bereich von ≥ 1,5 bis < 6.

Verwendbare Polyetherpolyole sind beispielsweise Polytetramethylenglykolpolyether, wie sie durch Polymerisation von Tetrahydrofuran mittels kationischer Ringöffnung erhältlich sind. Ebenfalls geeignete Polyetherpolyole sind Additionsprodukte von Styroloxid, Ethylenoxid, Propylenoxid, Butylenoxide und oder Epichlorhydrin an di- oder polyfunktionelle Startermoleküle. Meistens werden Polyetherpolyole mit Ethylenoxid oder Propylenoxid als Kettenverlängerer verwendet.

Geeignete Startermoleküle sind zum Beispiel Ethylenglykol, Diethylenglykol, Butyldiglykol, Glycerin, Diethylenglykol, Trimethylolpropan, Propylenglykol, Pentaerythrit, Sorbit, Saccharose, Ethylendiamin, Toluoldiamin, Triethanolamin, 1,4-Butandiol, 1,6-Hexandiol sowie niedermolekulare, Hydroxylgruppen aufweisende Ester derartiger Polyole mit Dicarbonsäuren.

Verwendbare Polyesterpolyole sind unter Anderem Polykondensate aus Di- sowie weiterhin Tri-, und Tetraolen und Di- sowie weiterhin Tri- und Tetracarbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden.

Beispiele für geeignete Diole sind Ethylenglykol, Butylenglykol, Diethylenglykol, Triethylenglykol, Polyalkylenglykole wie Polyethylenglykol, weiterhin 1,2-Propandiol, 1,3-Propandiol, 1,3-Butandiol, 1,3-Butandiol, 1,6-Hexandiol und Isomere, Neopentylglykol oder Hydroxypivalinsäureneopentylglykolester. Daneben können auch Polyole wie Trimethylolpropan, Glycerin, Erythrit, Pentaerythrit, Trimethylolbenzol oder Trishydroxyethylisocyanurat eingesetzt werden.

Als Polycarbonsäuren können beispielsweise Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, Bernsteinsäure, 2-Methylbernsteinsäure, 3,3-Diethylglutarsäure, 2,2-Dimethylbernsteinsäure, Dodekandisäure, Endomethylentetrahydrophthalsäure, Dimerfettsäure, Trimerfettsäure, Zitronensäure oder Trimellithsäure eingesetzt werden. Als Säurequelle können auch die entsprechenden Anhydride verwendet werden.

Den eingesetzten Polycarbonsäuren können auch Monocarbonsäuren und deren Derivate zugesetzt werden. Es kommen insbesondere auch biobasierte Ausgangsstoffe und/oder deren Derivate in Frage, wie z. B. Rizinusöl, Polyhydroxyfettsäuren, Ricinolsäure, Stearinsäure, Sojaölfettsäure, Hydroxymodifizierte Öle, Weintraubenkernöl, schwarzem Kümmelöl, Kürbiskernöl, Borretschsamenöl, Sojabohnenöl, Weizensamenöl, Rapsöl, Sonnenblumenkernöl, Erdnussöl, Aprikosenkernöl, Pistazienöl, Mandelöl, Olivenöl, Macadamianussöl, Avocadoöl, Sanddornöl, Sesamöl, Hanföl, Haselnussöl, Primelöl, Wildrosenöl, Distelöl, Walnussöl, Fettsäuren, Hydroxymodifizierte und epoxidierte Fettsäuren und Fettsäureester, beispielsweise basierend auf Myristoleinsäure, Palmitoleinsäure, Ölsäure, Vaccensäure, Petroselinsäure, Gadoleinsäure, Erukasäure, Nervonsäure, Linolsäure, alpha- und gamma-Linolensäure, Stearidonsäure, Arachidon-säure, Timnodonsäure, Clupanodonsäure und Cervonsäure.

Hydroxycarbonsäuren, die als Reaktionsteilnehmer bei der Herstellung eines Polyesterpolyols mit endständigen Hydroxylgruppen mitverwendet werden können, sind beispielsweise Hydroxycapronsäure, Hydroxybuttersäure, Hydroxydecansäure, Hydroxystearinsäure und dergleichen. Geeignete Lactone sind unter anderem Caprolacton, Butyrolacton und Homologe.

Verwendbare Polycarbonatpolyole sind Hydroxylgruppen aufweisende Polycarbonate, zum Beispiel Polycarbonatdiole. Diese sind durch Reaktion von Kohlensäurederivaten, wie Diphenylcarbonat, Dimethylcarbonat oder Phosgen, mit Polyolen, bevorzugt Diolen oder aus Kohlendioxid erhältlich.

Beispiele derartiger Diole sind Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenol A und lactonmodifizierte Diole der vorstehend genannten Art. Statt oder zusätzlich zu reinen Polycarbonatdiolen können auch Polyether-Polycarbonatdiole eingesetzt werden.

Verwendbare Polyetheresterpolyole sind solche Verbindungen, die Ethergruppen, Estergruppen und OH-Gruppen enthalten. Organische Dicarbonsäuren mit bis zu 12 Kohlenstoffatomen sind zur Herstellung der Polyetheresterpolyole geeignet, vorzugsweise aliphatische Dicarbonsäuren mit > 4 bis < 6 Kohlenstoffatomen oder aromatische Dicarbonsäuren, die einzeln oder im Gemisch verwendet werden. Beispielhaft seien Korksäure, Azelainsäure, Decandicarbonsäure, Maleinsäure, Malonsäure, Phthalsäure, Pimelinsäure und Sebacinsäure sowie insbesondere Glutarsäure, Fumarsäure, Bernsteinsäure, Adipinsäure, Phthalsäure, Terephthalsäure und Isoterephthalsäure genannt. Als Derivate dieser Säuren können beispielsweise deren Anhydride sowie deren Ester und Halbester mit niedermolekularen, monofunktionellen Alkoholen mit > 1 bis < 4 Kohlenstoffatomen eingesetzt werden.

Daneben können in der Komponente A) weitere Isocyanat-reaktive Verbindungen A2) enthalten sein, wie z.B. niedermolekulare Isocyanat-reaktive Verbindungen. Vorzugsweise können di- oder trifunktionelle Amine und Alkohole, bevorzugt Diole und/oder Triole mit Molmassen Mₙ kleiner als 400 g/mol, insbesondere von 60 bis 300 g/mol, zum Einsatz kommen, z.B. Triethanolamin, Diethylenglykol, Ethylenglykol und Glycerin. Sofern zur Herstellung der Polyurethan- und/oder Polyisocyanurat-Hartschaumstoffe solche niedermolekularen Isocyanat-reaktiven Verbindungen Anwendung finden, z.B. in der Funktion als Kettenverlängerungsmittel und/oder Vernetzungsmittel, kommen diese zweckmäßigerweise in einer Menge von bis zu 5 Gew.-%, bezogen auf das Gesamtgewicht der Komponente A zum Einsatz.

Die Komponente A2) umfasst auch alle weiteren isocyanat-reaktiven Verbindungen, beispielsweise Graft-Polyole, Polyamine, Polyaminoalkohole, Polythiole und/oder biobasierte Verbindungen mit isocyanat-reaktiven Gruppen wie z.B. Rizinusöl und seine Komponenten.

Selbstverständlich gehören zu den oben beschriebenen Isocyanat-reaktiven Verbindungen auch solche Verbindungen mit gemischten Funktionalitäten.

In der Polyurethanchemie optional einzusetzende Additive A3) sind dem Fachmann bekannt. Es handelt sich beispielsweise um Schaumstabilisatoren, wofür vor allem Polyethersiloxane in Frage kommen. Diese Verbindungen sind im Allgemeinen so aufgebaut, dass ein Copolymerisat aus Ethylenoxid und Propylenoxid mit einem Polydimethylsiloxanrest verbunden ist. Solche Substanzen sind Beispielsweise unter der Bezeichnung Struksilon 8031 der Fa. Schill und Seilacher oder auch TEGOSTAB® B 8443 der Fa. Evonik am Markt erhältlich. Auch silikonfreie Stabilisatoren, wie bspw. das Produkt LK 443 von Air Products, können eingesetzt werden.

Weiterhin werden häufig Flammschutzmittel eingesetzt, bevorzugt in einer Menge 5 bis 50 Gew.-%, bezogen auf die Gesamtmenge an Verbindungen mit gegenüber Isocyanatgruppen reaktiven Wasserstoffatomen in der Polyolkomponente, insbesondere 7 bis 35 Gew.-%, besonders bevorzugt 8 bis 25 Gew.-%. Flammschutzmittel sind dem Fachmann im Prinzip bekannt und beispielsweise in "Kunststoffhandbuch", Band 7 "Polyurethane", Kapitel 6.1 beschrieben. Dies können beispielsweise brom- und chlorhaltige Polyole oder Phosphorverbindungen wie die Ester der Orthophosphorsäure und der Metaphosphorsäure, die ebenfalls Halogen enthalten können, sein.

Bevorzugt werden bei Raumtemperatur flüssige Flammschutzmittel gewählt. Umweltfreundliche Produkte sind Gegenstand neuerer Entwicklungen.

Beispiele von geeigneten Polyisocyanaten B) sind 1,4-Butylendiisocyanat, 1,5-Pentandiisocyanat, 1,6- Hexamethylendiisocyanat (HDI), Isophorondiisocyanat (IPDI), 2,4- und/oder 2,4,4-Trimethylhexamethylendiisocyanat, die isomeren Bis(4,4'-isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'-und/oder 2,4'- und/oder 4,4'-Diphenylmethandiisocyanat (MDI) oder höhere Homologe (polymeres MDI, pMDI), 1,3- und/oder 1,4-Bis-(2-isocyanato-prop-2-yl)-benzol (TMXDI), 1 ,3-Bis-(isocyanatomethyl)benzol (XDI), sowie Alkyl-2,6-diisocyanatohexanoate (Lysindiisocyanate) mit C1 bis C6-Alkylgruppen.

Neben den vorstehend genannten Polyisocyanaten können anteilig auch modifizierte Diisocyanate mit Uretdion-, Isocyanurat-, Urethan-, Carbodiimid, Uretonimin, Allophanat-, Biuret-, Amid-, Iminooxadiazindion und/oder Oxadiazintrionstruktur sowie nicht-modifiziertes Polyisocyanat mit mehr als 2 NCO-Gruppen pro Molekül wie zum Beispiel 4-Isocyanatomethyl-1,8-octandiisocyanat (Nonantriisocyanat) oder Triphenylmethan-4,4',4"-triisocyanat mit eingesetzt werden.

Es ist möglich, dass im Reaktionsgemisch die Anzahl der NCO-Gruppen im Isocyanat und die Anzahl der gegenüber Isocyanaten reaktiven Gruppen zu einer Kennzahl (Index) von 110 bis 600 führen, bevorzugt zwischen 115 und 400. Diese Kennzahl kann auch in einem Bereich von > 180:100 bis < 330:100 oder aber auch von > 90:100 bis < 140:100 liegen.

Die Reaktionsmischung enthält weiterhin so viel Treibmittel C), wie zur Erzielung einer dimensionsstabilen Schaummatrix und der gewünschten Rohdichte nötig ist. In der Regel sind dies 0,5 - 30 Gewichtsteile Treibmittel bezogen auf 100 Gewichtsteile der Komponente A. Als Treibmittel werden vorzugsweise physikalische Treibmittel ausgewählt aus wenigstens einem Mitglied der Gruppe bestehend aus Kohlenwasserstoffen, halogenierten Ethern und perfluorierten Kohlenwasserstoffen mit 1 bis 8 Kohlenstoffatomen eingesetzt. Unter "physikalischen Treibmitteln" werden im Rahmen der vorliegenden Erfindung solche Verbindungen verstanden, die aufgrund ihrer physikalischen Eigenschaften leicht flüchtig sind und nicht mit der Isocyanatkomponente reagieren. Bevorzugt sind die erfindungsgemäß einzusetzenden physikalischen Treibmittel ausgewählt aus Kohlenwasserstoffen (z. B. n-Pentan, iso-Pentan, cycloPentan, Butan, Isobutan), Ethern (z. B. Methylal), halogenierten Ethern, perfluorierte Kohlenwasserstoffe mit 1 bis 8 Kohlenstoffatomen (z. B. Perfluorhexan) sowie deren Gemischen untereinander. Auch bevorzugt ist der Einsatz von (hydro)fluorierten Olefinen, wie z.B. HFO 1233zd(E) (Trans-1-chlor-3,3,3-trifluor-1-propen) oder HFO 1336mzz(Z) (cis-1,1,1,4,4,4-Hexafluor-2-buten), oder Additive wie FA 188 von 3M (1,1,1,2,3,4,5,5,5-Nonafluor-4-(trifluormethyl)pent-2-en), sowie der Einsatz von Kombinationen dieser Treibmittel. In besonders bevorzugten Ausführungsformen wird als Treibmittel C) ein Pentanisomer oder ein Gemisch verschiedener Pentanisomeren eingesetzt. Außerordentlich besonders bevorzugt wird Cyclopentan als Treibmittel C) eingesetzt. Weitere Beispiele für bevorzugt eingesetzte Fluorkohlenwasserstoffe sind z.B. HFC 245fa (1,1,1,3,3-Pentafluorpropan), HFC 365mfc (1,1,1,3,3-Pentafluorbutan), HFC 134a oder deren Mischungen verwendet. Es können auch verschiedene Treibmittelklassen kombiniert werden.

Insbesondere bevorzugt ist auch der Einsatz von (hydro)fluorierten Olefinen, wie z.B. HFO 1233zd(E) (Trans-1-chlor-3,3,3-trifluor-1-propen) oder HFO 1336mzz(Z) (cis-1,1,1,4,4,4-Hexafluor-2-buten), oder Additive wie FA 188 von 3M (1,1,1,2,3,4,5,5,5-Nonafluor-4oder2)-(trifluormethyl)pent-2-en und/oder 1,1,1,3,4,4,5,5,5- Nonafluor-4(oder2)-(trifluormethyl)pent-2-en), allein oder in Kombination mit anderen Treibmitteln. Diese haben den Vorteil, ein besonders niedriges Ozonabbaupotential (ODP) aufzuweisen und ein besonders niedriges Treibhauspotential (GWP) zu besitzen. Mit dem erfindungsgemäßen Verfahren lassen sich (hydro)fluorierte Olefine in vorteilhafter Weise als Treibmittel für Verbundsysteme einsetzen, da sich im Vergleich zu mit anderen Auftragstechniken hergestellten Verbundelementen Verbundelemente mit besseren Oberflächenstrukturen und verbesserter Haftung zur Deckschicht herstellen lassen.

Zusätzlich oder alternativ zu den oben aufgeführten physikalischen Treibmitteln können auch chemische Treibmittel (auch "Co-Treibmittel") verwendet werden. Bei diesen handelt es sich besonders bevorzugt um Wasser und/oder Ameisensäure. Vorzugsweise werden die chemischen Treibmittel zusammen mit physikalischen Treibmitteln verwendet. Bevorzugt werden die Co-Treibmittel in einer Menge bis 6 Gew.-%, besonders bevorzugt 0,5 bis 4 Gew.-% für die Verbundelemente, bezogen auf die Gesamtmenge an Verbindungen mit gegenüber Isocyanatgruppen reaktiven Wasserstoffatomen in der Komponente A.

Bevorzugt wird für Verbundelemente eine Mischung aus 0 und 6,0 Gew.-% an Co-Treibmittel und 1,0 bis 30,0 Gew.-% an Treibmittel, jeweils bezogen auf 100 Gew.-% der Komponente A, eingesetzt. Das Mengenverhältnis von Co-Treibmittel zu Treibmittel kann aber auch je nach Bedarf von 1:7 bis 1:35 betragen.

Das Reaktionsgemisch enthält weiterhin gegebenenfalls eine Katalysatorkomponente D), welche geeignet ist, die Treibreaktion, die Urethanreaktion und/oder die Isocyanuratreaktion (Trimerisierung) zu katalysieren. Die Katalysatorkomponenten können dem Reaktionsgemisch zudosiert oder auch ganz oder teilweise in der Isocyanat-reaktiven Komponente A) vorgelegt werden.

Hierfür geeignet sind insbesondere eine oder mehrere katalytisch aktive Verbindungen ausgewählt aus den folgenden Gruppen:
D1) Aminische Katalysatoren, z.B. Amidine, wie 2,3-Dimethyl-3,4,5,6-tetrahydropyrimidin, tertiäre Amine, wie Triethylamin, Tributylamin, Dimethylcyclohexylamin, Dimethylbenzylamin, N-Methyl-, N-Ethyl-, N-Cyclohexylmorpholin, N,N,N',N'- Tetramethylethylendiamin, N,N,N',N'-Tetramethylbutandiamin, N,N,N',N'-Tetramethylhexandiamin-1,6, Pentamethyldiethylentriamin, Bis(2-dimethylaminoethyl)ether, Bis-(dimethylaminopropyl)-harnstoff, Dimethylpiperazin, 1,2-Dimethyl-imidazol, N,N',N"-Tris-(dimethylaminopropyl)hexahydrotriazin, Bis[2-(N,N-dimethylamino)ethyl]ether, 1-Aza-bicyclo-(3,3,0)-octan und 1,4-Diaza-bi-cyclo-(2,2,2)-octan, und Alkanolaminverbindungen, wie Triethanolamin, Triisopropanolamin, N-Methyl- und N-Ethyl-diethanolamin, N,N-Dimethylaminoethoxyethanol, N,N,N'-Trimethylaminoethyl-ethanolamin und Dimethylethanolamin. Besonders geeignete Verbindungen sind ausgewählt aus der Gruppe umfassend tertiäre Amine, wie Triethylamin, Tributylamin, Dimethylcyclohexylamin, Dimethylbenzylamin, N,N,N',N'- Tetramethylethylendiamin, Pentamethyldiethylentriamin, Bis(2-dimethylaminoethyl)ether, Dimethylpiperazin, 1,2-Dimethyl-imidazol und Alkanolaminverbindungen, wie Tris(dimethylaminomethyl)phenol, Triethanolamin, Triisopropanolamin, N-Methyl- und N-Ethyl-diethanolamin, N,N-Dimethylaminoethoxyethanol, N,N,N'-Trimethylaminoethyl-ethanolamin und Dimethylethanolamin,
   In einer besonders bevorzugten Ausführungsform werden in der Katalysatorkomponente ein oder mehrere aminische Verbindungen gemäß folgender Struktur eingesetzt:

   (CH₃)₂N-CH₂-CH₂-X-CH₂-CH₂-Y

   wobei Y = NR₂ oder OH, vorzugsweise Y = N(CH₃)₂ oder OH, besonders bevorzugt Y = N(CH₃)₂ und wobei X= NR oder O, vorzugsweise X= N-CH₃ oder O, besonders bevorzugt X= N-CH₃. Dabei ist jedes R unabhängig von jedem anderen R wählbar und stellt einen beliebig aufgebauten
   organischen Rest mit mindestens einem C-Atom dar. Vorzugsweise ist R eine Alkylgruppe mit 1 bis 12 C-Atomen, insbesondere C1- bis C6-Alkyl, besonders bevorzugt Methyl und Ethyl, insbesondere Methyl.
D2) Carboxylate von Alkali- oder Erdalkalimetallen, insbesondere Natriumacetat, Natriumoctoat, Kaliumacetat, Kaliumoctoat, sowie Zinncarboxylate, z.B.. Zinn-(II)-acetat, Zinn-(II)-octoat, Zinn-(II)-ethylhexoat, Zinn-(II)-laurat, Dibutylzinndiacetat, Dibutylzinndilaurat, Dibutylzinnmaleat und Dioctylzinndiacetat. und Ammoniumcarboxylate. Insbesondere bevorzugt sind Natrium-, Kalium- und Ammoniumcarboxylate. Bevorzugte Carboxylate sind Formiate, Ethylhexanoate (=Octoate) und Acetate.

Bevorzugt enthält der Katalysator einen oder mehrere Katalysatoren ausgewählt aus der Gruppe bestehend aus Kaliumacetat, Kaliumoctoat, Pentamethyldiethylentriamin, N,N',N"-Tris-(dimethylaminopropyl)hexahydrotriazin, Tris(dimethylaminomethyl)phenol, Bis[2-(N,N-dimethylamino)ethyl] ether und N,N-Dimethylcyclohexylamin, besonders bevorzugt aus Pentamethyldiethylentriamin, N,N',N"-Tris-(dimethylaminopropyl)hexahydrotriazin und N,N-Dimethylcyclohexylamin, besonders besonders bevorzugt aus Pentamethyldiethylentriamin, N,N',N"-Tris-(dimethylaminopropyl)hexahydrotriazin und N,N-Dimethylcyclohexylamin in Kombination mit Kaliumacetat, Kaliumoctoat oder Kaliumformiat oder Natriumformiat

Die zur Herstellung des Hartschaumstoffes nötigen Katalysatoren, insbesondere aminische Katalysatoren (D1) in Kombination mit als Trimerisationskatalysatoren eingesetzten Salze,werden in einer bevorzugten Ausführungsform in solcher Menge eingesetzt, dass z.B. auf kontinuierlich produzierenden Anlagen Elemente mit flexiblen Deckschichten mit für Schnellläufern üblichen Geschwindigkeiten je nach Elementstärke produziert werden können.

Die Reaktivität der Reaktionsmischung wird i. d. R. mittels Katalysator (oder über andere die Reaktivität erhöhende Komponenten, z.B. Aminopolyether), auf die Bedürfnisse angepasst. So verlangt die Herstellung von dünnen Platten ein Reaktionsgemisch mit einer höheren Reaktivität als die Herstellung von dickeren Platten. Typische Parameter sind die Startzeit und die Abbindezeit als Maß für die Zeit, zu der das Reaktionsgemisch zu reagieren beginnt, und für den Zeitpunkt, an dem ein hinreichend stabiles Polymernetzwerk gebildet ist. Typische Startzeiten (gekennzeichnet durch den Beginn des Aufschäumens der Reaktionsmischung bei visueller Beurteilung) für die Verarbeitung mittels konventioneller Technik liegen im Bereich von 2s bis 50s.

Mittels erfindungsgemäßem Verfahren lassen sich auch Reaktionsgemische mit hohen bzw. höheren Reaktivitäten, d.h. Startzeiten von < 5s, insbesondere < 2s, ganz besonders < 1s und Abbindezeiten von < 25 s, insbesondere < 20s und ganz besonders < 14s vorteilhaft verarbeiten. Das erfindungsgemäße Verfahren kann insbesondere für die Herstellung von dünnen Platten vorteilhaft sein, da hier wenig Material für das Zusammenfließen zur Verfügung steht.

Bevorzugt wird eine Kombination aus Katalysatorkomponenten D1 und D2 in dem Reaktionsgemisch verwendet. In diesem Fall sollte das molare Verhältnis so gewählt sein, dass das Verhältnis von D2/D1 zwischen 0,1 und 80 liegt, insbesondere zwischen 2 und 20. Kurze Abbindezeiten können zum Beispiel mit mehr als 0,9 Gew.-% Kalium-2-ethylhexanoat bezogen auf alle Komponenten des Reaktionsgemisches erzielt werden.

Bei allen ausgeführten Austragsvorrichtungen kann der Auftrag in und gegen die Bewegungsrichtung der Deckschicht ausgeführt werden. Selbst in einer Ausführungsform, wie in einer der Figuren dargestellt, kann es von Vorteil sein, dass nicht alle Gießrohre mit dem gleichen Winkel zur Deckschicht platziert werden.

Mit den erfindungsgemäßen Austragsvorrichtungen umfassend eine oder mehrere Gießharken, die an einem Ende oder beiden Enden vergrößerte Austragsmengen aufweisen, lassen sich Verbundelemente herstellen, die gegenüber den Standardvorrichtungen des Stands der Technik eine verbesserte Randausbildung ohne die geschilderten Qualitätsnachteile aufweisen.

### BEVORZUGTE AUSFÜHRUNGSBEISPIELE

Weitere, die Erfindung verbessernde Maßnahmen werden nachstehend gemeinsam mit der Beschreibung eines bevorzugten Ausführungsbeispiels der Erfindung anhand der Figuren näher dargestellt. Die Figuren zeigen jeweils Gießharken in 400 mm Breite. Figuren 4 und 5 und zeigen erfindungsgemäße Vorrichtungen bei der Durchführung von erfindungsgemäßen Verfahren. In Figur 6 ist beispielhaft ein Auftragsprofil einer Auftragsvorrichtung umfassend eine Gießharke des Typs A und in Figur 7 ein Auftragsprofil einer Auftragsvorrichtung umfassend zwei Gießharken des Typs B und einer dazwischenliegenden konventionellen Gießharke dargestellt.

Es zeigen:

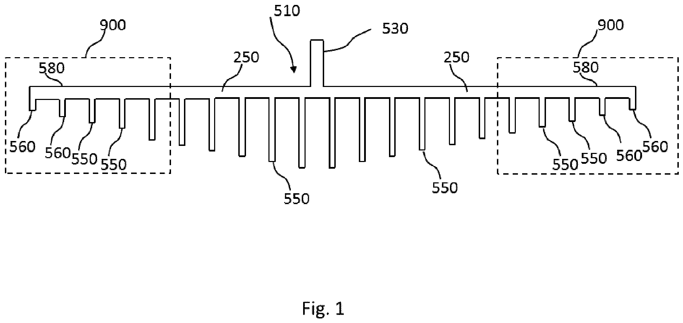

Figur 1 eine erfindungsgemäße Gießharke des Typs A 510

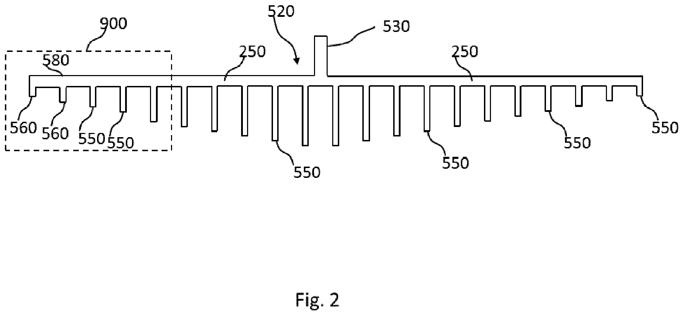

Figur 2 eine erfindungsgemäße Gießharke des Typs B 520

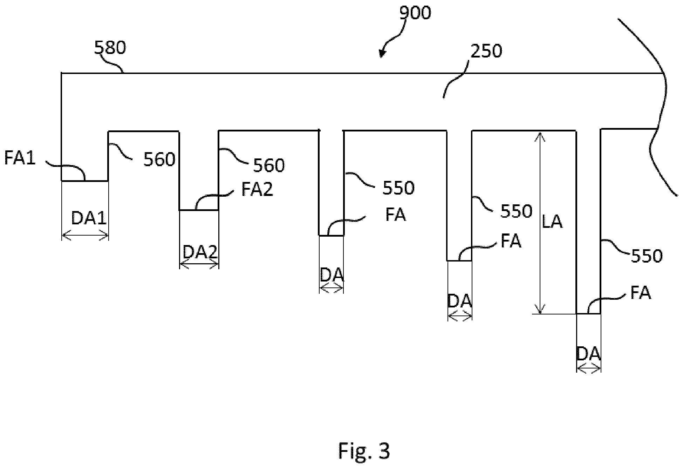

Figur 3 vergrößerte Ansicht des Ausschnitts 900 von Figur 1 und 2

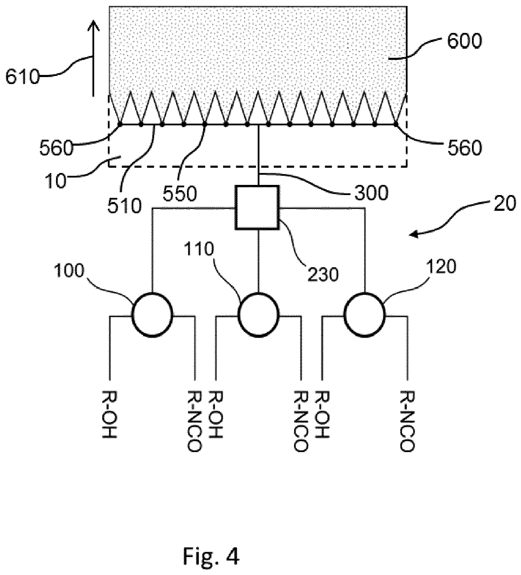

Figur 4 Auftragsvorrichtung bestehend aus einer erfindungsgemäßen Gießharke des Typs A 510

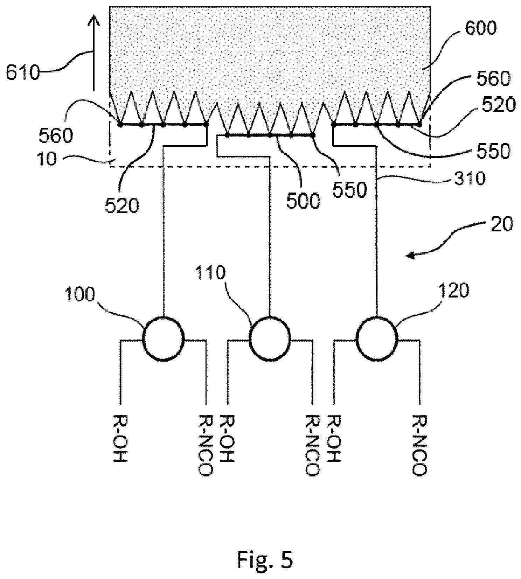

Figur 5 Auftragsvorrichtung bestehend aus zwei Gießharken des Typs B 520 und einer konventionellen Gießharke 500
Figur 6 Auftragsprofil der Auftragsvorrichtung aus Figur 4
Figur 7 Auftragsprofil der Auftragsvorrichtung aus Figur 5

Figur 1 zeigt eine schematische Abbildung einer Gießharke des Typs A 510 mit mittigem Zulauf 530 der flüssigen Reaktionsmischung in den Verteilerkanal 250. Die beiden Enden 580 der Gießharke 510 weisen Austrittsöffnungen 560 auf, deren Austragsmenge gegenüber der Austragsmenge aus den übrigen Austrittsöffnungen 550 erhöht ist. Der Ausschnitt 900 ist in Figur 3 vergrößert dargestellt.

Figur 2 zeigt eine schematische Abbildung einer Gießharke des Typs B 520 mit mittigem Zulauf 530 der flüssigen Reaktionsmischung in den Verteilerkanal 250. Bei dieser Gießharke weist nur das Ende 580 die Austrittsöffnungen mit erhöhter Austragsmenge 560 auf. Der Ausschnitt 900 ist in Figur 3 vergrößert dargestellt.

Figur 3 zeigt vergrößert ein Ende mit den äußeren Austrittsöffnungen einer symmetrischen Gießharke [Ausschnitt 900, Figur 1] bzw. das Ende mit den vergrößerten Austrittsöffnungen einer asymmetrischen Gießharke [Ausschnitt 900, Figur 2]. In diesem Beispiel besitzen die beiden äußeren Austrittsöffnungen 560 gegenüber den weiter innenliegenden Austrittsöffnungen 550 vergrößerte Durchmesser DA1 - DA2, wodurch sich auch vergrößerte Flächen der Austrittsöffnungen (FA1 - FA2) ergeben.

Figur 4 zeigt eine schematische Ansicht einer Anlage zum Betrieb eines Verfahrens, das zur Herstellung von Verbundelementen dient. Die Anlage weist eine Doppelband-Transportanlage mit einer Auftragsvorrichtung 20 zum Auftragen eines aufschäumenden Reaktionsgemisches 600 auf eine Deckschicht 10, in die eine untere Deckschicht 10, deren Kontur gestrichelt gezeigt ist, und eine weitere obere Deckschicht (nicht dargestellt) einlaufen. Die Gießharke 510 und die Deckschicht 10 sind in der Bewegungsrichtung der Deckschicht 610 relativ zueinander bewegbar. Die Mischköpfe 100, 110, 120 vereinigen jeweils ihre Eduktströme (hier bezeichnet mit R-OH und R-NCO) zu Produktströmen, die einem mit den Mischköpfen verbundenen Verteiler 230 zugeführt werden. Die Produktströme enthalten somit die schäumbare Polyurethan-Reaktionsmischung. In dem Verteiler 230 erfolgt eine Homogenisierung der Produktströme, so dass beispielsweise Unterschiede im zeitlichen Reaktionsfortschritt oder zeitlich bedingte Unterschiede in den Eigenschaften der Eduktströme ausgeglichen werden. Bei zeitlich bedingten Unterschieden in den Eigenschaften der Eduktströme kann es sich beispielsweise um solche Unterschiede handeln, die auf Dichteschwankungen oder auf Schwankungen in der Förderleistung der Eduktströme zu den Mischköpfen beruhen. Die Reaktionsmischung verlässt den Verteiler 230 über die Austragsleitung 300, welche in der Gießharke 510 mit den Austragsöffnungen 550 und 560 endet.

Die Auftragsvorrichtung 20 umfasst in dieser ersten Ausführungsform der Erfindung genau eine Gießharke vom Typ A 510, wie beispielhaft in Figur 1 gezeigt. Die Änderung der Durchmesser der Austrittsöffnungen ist von der Mitte zu den beiden äußeren Enden hin bevorzugt symmetrisch. Bei der gezeigten Variante wird nur eine einzige Gießharke für den Austrag benutzt, wobei die Länge der Gießharke in etwa der Breite der Deckschicht entspricht. Insbesondere bei großen Deckschichtbreiten führt die größere Länge der Gießharke allerdings zu längeren Fließwegen und somit zu einem größeren Druckverlust und höheren Verweilzeiten als bei Verwendung von mehreren Gießharken, weshalb das Verfahren mit nur einer einzigen Gießharke bevorzugt bei kleineren Deckschichtbreiten angewendet wird. Die Zuführung der Reaktionsmischung erfolgt bei der in Figur 1 gezeigten Ausführung daher bevorzugt in der Mitte der erfindungsgemäßen symmetrischen Gießharke, um die Verweilzeit und den Druckverlust möglichst zu reduzieren.

Figur 5 gibt eine mögliche Anordnung mehrerer Gießharken in einer Auftragsvorrichtung wieder, wobei die Gießharken 520 und die Deckschicht 10 in der Bewegungsrichtung der Deckschicht 610 relativ zueinander bewegbar sind. Es wird eine Auftragsvorrichtung 20 zum Auftragen eines aufschäumenden Reaktionsgemisches 600 auf eine Deckschicht 10 gezeigt, insbesondere zur Herstellung eines Verbundelementes. Es ist eine deutliche Verbesserung der Randausbildung einer Dämmplatte zu erwarten, wenn für die beiden äußeren Gießharken 520 die erfindungsgemäßen asymmetrischen Gießharken vom Typ B, z.B. analog Figur 2, mit erhöhten Austragsmengen an den äußeren Enden verwendet werden.

Das Ende mit der höheren Austragsmenge der asymmetrischen Gießharken ist jeweils ganz außen angeordnet, um zum Rand der Deckschicht hin mehr Material aufzutragen. Wenn es die Gesamtaustragsbreite erfordert, wird, wie in Figur 5 gezeigt, in der Mitte zusätzlich eine konventionelle Gießharke 500 benutzt. Je nach Breite der Deckschicht können auch mehrere konventionelle Gießharken eingesetzt werden. Bei schmaleren Deckschichtbreiten braucht man die mittlere Gießharke nicht.

Die Anzahl der Gießharken kann, wie in Figur 5 gezeigt, der Anzahl der Mischköpfe 100, 110, 120 entsprechen.

Die drei Gießharken 500 und 520 sind in Figur 5 im Wesentlichen nebeneinander angeordnet. Dass die mittlere, dem Stand der Technik entsprechende Gießharke etwas nach hinten versetzt ist, soll die Umstände verdeutlichen, dass solche Gießharken gewisse Raumerfordernisse haben, die eine Positionierung direkt nebeneinander gegebenenfalls ausschließen. Die Gießharken 520 können auch beispielsweise in Winkeln ≤ 80° zur Bewegungsrichtung 610 der Deckschicht 10 angeordnet sein.

Der Einlauf des Reaktionsgemisches von den Austragsleitungen 310 der Mischköpfe 100, 110 und 120 in die Gießharken erfolgt in Figur 5 jeweils am Ende des Gießrohres, insbesondere an den beiden äußeren asymmetrischen Gießharken 520 an dem Ende mit den nicht vergrößerten Lochdurchmessern.

Figur 6 gibt beispielhaft die Austragsmengen aus einer symmetrischen Gießharke 510 entsprechend Figur 1 wieder. Es wurde eine symmetrische Gießharke verwendet, welche an beiden Seiten jeweils 2 Austrittsöffnungen mit größeren Durchmessern und dadurch höheren Austragsmengen aufweist (1,2 und 19, 20). Der Verteilerkanalquerschnitt ist in diesem Fall konstant, die Gießharke weist 20 Löcher auf.

Figur 7 gibt beispielhaft die Austragsmengen aus einer Auftragsvorrichtung umfassend 2 asymmetrische Gießharken 520 gemäß Figur 2 und einer konventionellen Gießharke 500, angeordnet wie in Figur 6 gezeigt, wieder. Die beiden asymmetrischen Gießharken vom Typ B (Austrittsöffnung A1 bis A20 bzw. C1 bis C20) haben am jeweils äußeren, zum Deckschichtrand hin zeigenden Ende des Gießrohres 2 Austrittsöffnungen mit größeren Durchmessern, welche dadurch höhere Austragsmengen aufweisen (A1, A2 und C19, C20). Der Verteilerkanalquerschnitt ist jeweils konstant, jede Gießharke weist 20 Löcher auf.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiven Einzelheiten oder räumlicher Anordnungen, können sowohl für sich als auch in den verschiedensten Kombinationen im Anspruchsbereich erfindungswesentlich sein.

### Bezugszeichenliste

Verwendete Bezugszeichenliste für alle Figuren:
- 10: Deckschicht
- 20: Vorrichtung
- 100, 110, 120: Mischköpfe
- 230: Verteiler
- 250: Verteilerkanal
- 300: Austragsleitung vom Verteiler zur Gießharke
- 310: Austragsleitung vom Mischkopf
- 500: konventionelle Gießharke
- 510: erfindungsgemäße Gießharke des Typs A
- 520: erfindungsgemäße Gießharke des Typs B
- 530: Zulauf der Gießharke
- 550: Austragsöffnung mit gewöhnlichem Austrag
- 560: Austragsöffnung mit erhöhtem Austrag
- 580: Ende der Gießharke mit erhöhter Austragsmenge
- 600: Schaumschicht
- 610: Bewegungsrichtung der Deckschicht 10
- 900: Detailansicht vom Ende der Gießharke
- FA: Lochquerschnitt
- FA1: Lochquerschnitt des äußersten Lochs mit Mehraustrag
- FA2: Lochquerschnitt des zweitäußersten Lochs mit Mehraustrag
- DA: Lochdurchmesser
- DA1: Lochdurchmesser des äußersten Lochs mit Mehraustrag
- DA2: Lochdurchmesser des zweitäußersten Lochs mit Mehraustrag
- LA: Lochlänge

## Patentansprüche

1. Gießharke zur Auftragung eines flüssigen Reaktionsgemisches auf eine Deckschicht, umfassend einen Verteilerkanal und mehrere Austrittsöffnungen, wobei die Geometrie der Austrittsöffnungen in der Gießharke so gestaltet ist, dass die Austragsmenge an mindestens einem Ende der Gießharke größer ist als in der Mitte der Gießharke.

2. Gießharke gemäß Anspruch 1, wobei die Austragsmenge an beiden Enden des Gießrohrs größer ist als in der Mitte der Gießharke.

3. Gießharke gemäß Anspruch 1, wobei die Austragsmenge an genau einem Ende des Gießrohrs größer ist als in der Mitte der Gießharke.

4. Gießharke gemäß einem der vorangehenden Ansprüche, wobei die Austragsmenge an mindestens einem Ende für die äußeren Austrittsöffnungen das 1,1 - 3 fache, besonders bevorzugt das 1,2 - 2 fache der übrigen Austrittsöffnungen beträgt.

5. Gießharke gemäß einem der vorangehenden Ansprüche, wobei die Vergrößerung der Austragsmenge dadurch erzielt wird, dass die durchschnittliche Querschnittsfläche FA der Austrittsöffnungen an dem mindestens einen Ende größer ist als die durchschnittliche Querschnittsfläche der übrigen Austrittsöffnungen.

6. Gießharke gemäß einem der vorangehenden Ansprüche, wobei die Vergrößerung der Austragsmenge dadurch erzielt wird, dass die durchschnittliche Lochlänge der Austrittsöffnungen an dem mindestens einen Ende kleiner ist als die durchschnittliche Lochlänge LA der übrigen Austrittsöffnungen.

7. Auftragsvorrichtung zur Herstellung eines Verbundelementes aus mindestens einer Deckschicht und einer Kernschicht umfassend eine Gießharke gemäß Anspruch 1.

8. Auftragsvorrichtung gemäß Anspruch 7 umfassend genau eine Gießharke gemäß Anspruch 2, welche im Wesentlichen quer zur Bewegungsrichtung der Deckschicht (d.h. Bewegungsrichtung der Deckschicht und Längsachse der Gießharke bilden einen Winkel von > 60 °, bevorzugt > 80 ° und besonders bevorzugt in einem Winkel > 85 °) angeordnet ist.

9. Auftragsvorrichtung gemäß Anspruch 7 umfassend mindestens eine Gießharke gemäß Anspruch 3 und gegebenenfalls weitere Gießharken, wobei mindestens eine Gießharke in der Auftragsvorrichtung so positioniert ist, dass die größere Austragsmenge zum Rand der Deckschicht hin aufgetragen wird.

10. Auftragsvorrichtung gemäß Anspruch 7 umfassend zwei Gießharken gemäß Anspruch 3, wobei diese so angeordnet sind, dass jeweils aus den Enden mit den vergrößerten Austragsmengen zu jeweils einem Rand der Deckschicht hin aufgetragen wird und die gegebenenfalls weiteren Gießharken in einer Linie oder leicht versetzt dazwischen angeordnet sind.

11. Auftragsvorrichtung gemäß einem der Ansprüche 7, 8, 9 oder 10, wobei die Anzahl der Austrittsöffnungen je Gießharke in der erfindungsgemäßen Vorrichtung 12/m bis 125/m, besonders bevorzugt 25/m bis 100/m, und ganz besonders bevorzugt 30/m bis 75/m beträgt.

12. Verfahren zur Herstellung von Schaum-Verbundelementen, wobei eine Auftragsvorrichtung gemäß der Ansprüche 7 bis 11 verwendet wird, um eine flüssige Reaktionsmischung auf eine Deckschicht aufzutragen.

13. Verfahren gemäß Anspruch 12, wobei die Reaktionsmischung
ein Polyisocyanat B), und
eine isocyanat-reaktive Zusammensetzung A), enthaltend
mindestens ein Polyol A1) und
gegebenfalls weitere isocyanat-reaktive Verbindungen A2), und
gegebenenfalls Additive und Hilfsmittel A3) wie z.B. Stabilisatoren und Flammschutzmittel
optional Katalysatoren D), und
ein (oder mehrere) Treibmittel C) enthält.
